# EUROPEAN PATENT SPECIFICATION

(11) **EP 1 321 370 B1**
(45) Date of publication and mention of the grant of the patent: **29.11.2006**
(21) Application number: 01830771.0
(22) Date of filing: 17.12.2001
(51) Int. Cl.: B65D 21/02, B29C 49/54

(54) **Modular bottle**
Modulare Flasche
Bouteille modulaire

(43) Date of publication of application: 25.06.2003
(73) Proprietor: Pici, Alessandro, 00158 Roma (IT)
(72) Inventor: Pici, Alessandro, 00158 Roma (IT)
(74) Representative: Russo, Saverio

(56) References cited:
- WO-A-94/02368
- DE-C- 411 170
- FR-A- 2 684 072
- US-A- 3 732 054
- US-A- 4 691 828
- US-A- 5 449 078
- US-A- 5 941 403

## Description

The invention consists in a plastic modular bottle composed of two or more independent modules that is bottles, joined together in a way as to permit their singular detachment.

In the everyday use of plastic bottles some practical drawbacks arise which may be summarised as follows.

A need of a family is to buy beverages, especially water in bottles that have normal capacity 1,5 or 2 litres. One initial drawback in this packaging lies in the fact that the content of plastic bottles (high capacity), in particular for fizzy or soft drinks, is the fact that the bottle is scarcely fully consumed when opened initially, resulting in a loss of product freshness and alteration in taste; in fact, when for example a fizzy drink is opened, the gas contained within escapes rapidly forcing the individual to consume it in a short time, in order to avoid further loss of both gas and taste.

Moreover, long storage of an opened bottle, apart from causing loss of freshness, and as seen for fizzy drinks, loss of gas, may also cause alterations in the chemical-physical composition due to going over the maximum time limit as recommended by the manufacturers of the product.

Such a drawback is particularly serious when it is necessary to conserve drinks, in particular fruit juices i.e. soft drinks

Another drawback lies in the fact that storage of a great variety of drinks requires ample storage space; such a drawback remains even if the beverages are contained in small bottles.

French Patent application A 2 684 072 relates to a packaging system in accordance with the preamble of claim 1, individually comprising an internal access opening and first and second complementary means, placed at different locations of this package to allow the detachable assembly together of two such packages juxtaposed. The main disadvantage of such packing system is the fact that said packages, consisting in bottles, are reciprocally joined by means of threading positioned on the mouth (male) and on a cavity of the base of each bottle (female). Therefore the bottles require a rotating action and not an axial thrust, making the connection more complicated.

A further disadvantage of this packaging system is due to the fact that only the mouth of the lower bottle is introduced in the cavity of the upper bottle.

WO 94/02368 relates to a thermoplastic moulded water bottle, and in particular stackable water bottle with a specially configured base. Furthermore this system is related in particular to large bottles for water coolers. The aim of the present invention is to overcome the abovementioned drawbacks.

Another important aim is to provide a model for a modular bottle which is innovative both in terms of design and function, and which represents a novelty and proves to be a distinguishing factor for the company, which adopts it for its products.

A further aim is to stock a great variety of different beverages in smaller spaces than that normally required for traditional capacity bottles, thus saving storage space.

To these ends the invention solves the problem of providing a vertically assembled modular bottle, made up of smaller independent, separable bottles, i.e. modules, which may be removed singularly when required, without altering the chemical-physical composition of the beverages contained in the remaining modules forming part of the modular bottle.

The bottle is described as follows, according to the invention, in a preferred embodiment, which do not preclude other possibilities within the field of the invention, illustrated in the following figures:

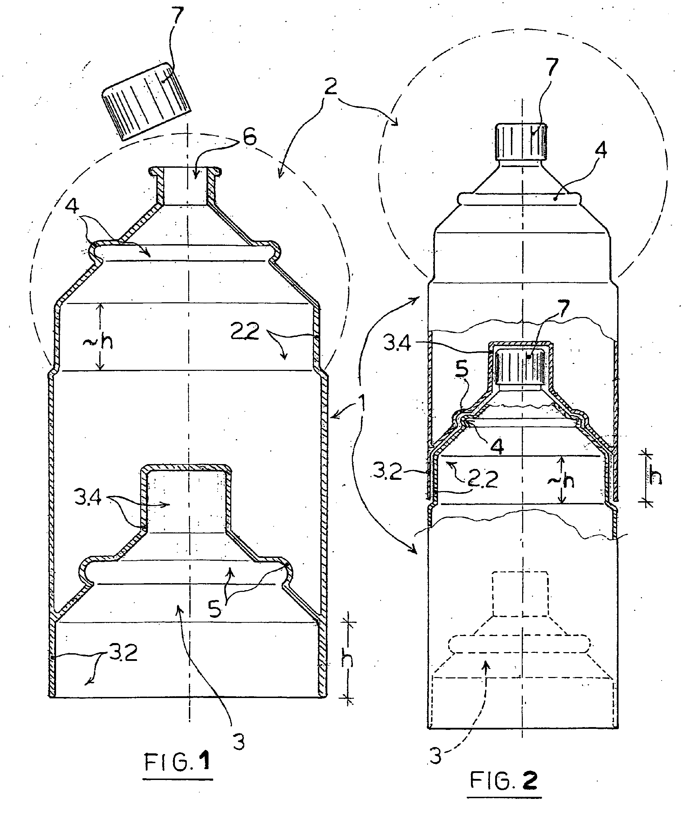

Fig. 1: a bottle i.e. module of the modular bottle;
Fig. 2: a modular bottle formed by two modules as in fig. 1;
Fig. 3: a modular bottle formed by four stacked, single, separable independent modules;
Fig. 4: section of the mould to produce the modular bottle of the invention;
The plastic modular bottle 1 according to the invention is made up of two or more stacked superimposed modules, of identical shape.

The independent modules are furnished with their own cap 7.

The modules are perfectly superimposed in the modular bottle, permitting each module to contain the same or different beverages.

The modules can be easily detached from the main modular bottle so that the beverages can be consumed independently without altering the beverages in the remaining modules.

This produces numerous advantages, the most evident being the fact that for example, a traditional two-litre bottle can be composed of four independent half-litre modules, each containing the same or a different drink.

More in detail, a modular two-litre bottle, for example, made up of four half-litre modules, permits access to the beverages by opening one module at a time and therefore, when consuming, for example, half a litre of a beverage, that is, only one module, the remaining one and a half-litres contained within the three remaining sealed modules, preserve their characteristics of taste and freshness and in addition also the gaseous contents.

A further important advantage is the possibility of preserving both the freshness and taste of the beverages: in fact, as said before, if the content of the high capacity bottle is not consumed in a short time, especially if containing fizzy beverages, the taste is not altered.

The presence of more modules permits the opening of each module in different moments, thus safeguarding both taste and freshness.

A further advantage consists in the fact that instead of handling a heavy and awkward bottle, the consumer may detach one single module and, by virtue of its reduced weight and size, may pour the content more easily into a glass.

The modules i.e. the bottles are reciprocally joined inserting the neck and shoulder 2 of each module in the recess 3 of the superimposed module. At this aim the neck and shoulder 2 has the same external shape of the internal shape of the recess 3.

All modules, that is the single bottles of the modular bottle 1, are of the same design, i.e. shape and dimension.

In the main embodiment the recess 3, forms a first device consisting in a circular band 3.2 that permits the housing of the external circular wall 2.2 of the module positioned below.

Furthermore in order to obtain a perfect joining, fitting and stacking of the modules, each modular bottle is furnished with a second joining device consisting in an elastic deformable rib 4 on the neck and shoulder 2 of the lower positioned module, to be inserted with a snap- fit engagement, in the annular cavity of the annular rib 5 of the recess 3, of similar shape of the rib 4, by means of an axial thrust.

In order to connect the two superimposed modules it is therefore sufficient to insert the upper neck and shoulder 2 of the lower module, in the cavity 3.4 of the recess 3 of the upper module, of suitable dimensions to receive the mouth 6 of the lower module, thus permitting by means of an axial thrust the independent stacking of the modules closed by the cap 7.

Preferably the making of a single plastic module is carried out using the known techniques;

The making of the modules, by means of moulds presents no particular problems;

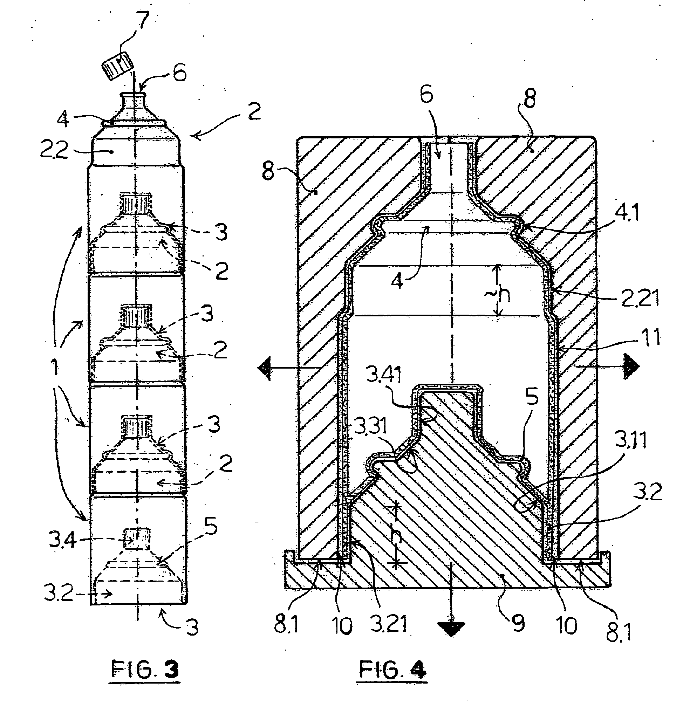

Figure 4 illustrates a composed mould suitable to obtain modules according to the invention.

The mould is formed with two vertical symmetrical semimoulds 8 having an internal concave wall identical to the external convex wall of the bottle.

The internal concave wall is characterised by a circular surface 2.21 having the form of a band that protrudes from the internal wall 11 of the mould 8, and by a groove 4.1 to form the annular rib 4 of the module.

At the bottom, the mould 8 is closed by a plug 9 having the external outlines 3.11, 3.21, 3.31 3.41 of the recess 3.

The plug 9 and the two semimoulds 8 form an interspace 10 having a radial dimension identical to the thickness and height h of the circular band 3.2 of the modular bottle.

## Claims

1. Plastic modular bottle formed by a plurality of stacked, separable and independent modules (1), wherein the modules are reciprocally joined by inserting the neck and the shoulder (2) of each single module in a recess (3) made in the bottom of the sumperimposed module, **characterised in that that** the recess includes an axial section extending over part of the side wall of the module disposed below, and that the shoulder of each module is formed with an annular rib (4) in snap-fit engagement with a ring-shaped cavity (5) formed in the recess of the superimposed module.

2. Plastic modular bottle as claimed in claim 1 **characterised by** the fact that the recess (3) of each module forms a circular band (3.2) that permits the housing of the external circular wall (2.2) of the module positioned below.

3. Plastic modular bottle as claimed in claim 1, **characterised by** the fact that the annular rib (4) consists in an elastic deformable convex rib (4) on the neck and shoulder (2) of the lower positioned bottle to be inserted by means of an axial thrust in the ring-shaped cavity (5) positioned in the recess (3), having an internal shape matching that of rib (4).

4. Plastic modular bottle as claimed in claim 1, **characterised by** the fact that the recess (3) has a cavity (3.4) of suitable dimensions to receive the mouth (6) of the lower module, to permit the independent stacking of the bottles furnished with cap.

5. Plastic modular bottle as claimed in the previous claims **characterised by** the fact that the joining of the modules if obtained by the combination of the reciprocal blocking devices as claimed in claims 2 and 3.

6. Mould to obtain modules as claimed in claims 1 to 5 **characterised by** two semimoulds (8) and a plug (9) to be inserted in the circular bottom of said semimoulds (8), the semimoulds forming inside the outline of the module.

7. Mould as claimed in claim 6 **characterised by** the fact that the semimoulds (8) form with the plug (9) an interspace (10) having radial dimension identical to the thickness of the band (3.2) of the module, and a height (h) equal to the height of said band.

## Patentansprüche

1. Modulare Plastikflasche, bestehend aus einer Mehrzahl gestapelter, getrennter und unabhängiger Module (1), wobei die Module durch Einschieben der Hals- und Schulterteile (2) eines jeden Moduls in einer in den Boden des übergelagerten Moduls eingebrachten Ausnehmung miteinander verbunden sind, **dadurch gekennzeichnet, dass** die Ausnehmung einen axialen teilweise über die Seitenfläche des untergelagerten Moduls hinausragenden Abschnitt einschließt, und dass die Schulter eines jeden Moduls mit eine ringförmigen Rippe (4) ausgebildet ist, die in einen ringförmigen, in der Ausnehmung des übergelagerten Moduls ausgebildeten Hohlraum (5) einrastet.

2. Modulare Plastikflasche nach Anspruch 1, **dadurch gekennzeichnet dass** die Ausnehmung (3) eines jeden Moduls als kreisförmiges Band (3.2) ausgebildet ist, das eine Umschließung der kreisförmigen äußeren Wand (2.2) des darunterliegenden Moduls zulässt.

3. Modulare Plastikflasche nach Anspruch 1, **dadurch gekennzeichnet dass** die ringförmige Rippe (4) aus einer elastisch verformbaren konvexen Rippe am Hals und an der Schulter (2) der untergelagerten Flasche besteht, die durch einen axialen Schub in den in der Ausnehmung (3) untergebrachten Hohlraum (5) einzufügen ist, die ein der Rippe (4) entsprechende Innenform aufweist.

4. Modulare Plastikflasche nach Anspruch 1, **dadurch gekennzeichnet dass** die Ausnehmung (3) einen Hohlraum (3.4) geeigneten Ausmaßes aufweist, um die Mündung (6) des unteren Moduls aufzunehmen, um ein unabhängiges Stapeln der mit einem Deckel versehenen Flaschen zu erlauben.

5. Modulare Plastikflasche nach einem der vorhergehenden Ansprüche, **dadurch gekennzeichnet dass** die Verbindung der Module durch eine Kombination der in Anspruch 2 und 3 erwähnten gegenseitigen Rastvorrichtungen erreicht wird.

6. Gesenk zur Herstellung der in den Ansprüchen 1 bis 5 erwähnten Module, **dadurch gekennzeichnet, dass** es zwei Halbmodule (8) und einen in den kreisförmigen Boden der genannten Halbmodule (8) einzufügenden Pfropfen aufweist, sodaß die Halbmodule im Inneren den Umfang des Moduls bilden.

7. Gesenk nach Anspruch 6, **gekennzeichnet dadurch dass** die Halbmodule (8) mit dem Pfropfen (9) einen Zwischenraum (10) bilden, der einen mit der Stärke des Modulbandes (3.2) übereinstimmenden Radius und eine der Höhe des genannten Bandes entsprechende Höhe (h) aufweist.

## Revendications

1. Bouteille modulaire en plastique constituée par une pluralité de modules empilés, séparables et indépendants (1), où les modules sont réciproquement joints en insérant le cou et l'épaule (2) de chaque module simple dans la cavité (3) dans le fond du superposé module, **caractérisés en ce que** la cavité inclut une coupe longitudinale prolongeant la pièce finie du surface latéral du module disposé ci-dessous, et que l'épaule de chaque module est formée avec une nervure annulaire (4) pour l'emboîtement dans la surface avec une cavité de forme annulaire (5) formée dans la cavité (3) du module superposé.

2. Bouteille modulaire en plastique selon la revendication 1 a **caractérisé par le fait que** la cavité (3) de chaque module forme une bande circulaire (3.2) que le permet le logement de la surface circulaire externe (2.2) du module placées ci-dessous.

3. Bouteille modulaire en plastique selon la revendication 1, **caractérisée par le fait que** la nervure annulaire (4) consiste en nervure convexe déformable élastique (4) sur le cou de l'épaule (2) de la bouteille placée inférieure à insérer au moyen d'une poussée axiale, dans la cavité de forme annulaire (5) placée dans la cavité (3), ayant une forme interne que celle de la nervure (4).

4. Bouteille modulaire en plastique selon la revendication 1, **caractérisée par le fait que** la cavité (3) a une cavité (3.4) ayant dimensions appropriées pour recevoir la bouche (6) du module inférieur, pour permettre l'empilement indépendant des bouteilles fournies avec le bouchon 7.

5. Bouteille modulaire en plastique selon les réclamations précédentes **caractérisées par le fait que** la jonction des modules est obtenu par le dispositifs de blocage réciproques selon les revendications 2 et 3.

6. Moule pour obtenir des modules selon les revendications 1 a 5 **caractérisés par** deux semi moules (8) et une corps (9) à insérer dans le fond circulaire de lesdits semi moules (8), les semi moules formant à l'intérieur le contour du module.

7. Moule selon la revendication 6 **caractérisée par le fait que** les semi moules (8) forment avec la corps (9) un espace (10) ayant la dimension radiale identique à l'épaisseur de la bande (3.2) du module, et une hauteur (h) égale à la hauteur de ladite bande.
